# DEMANDE DE BREVET EUROPEEN

(11) **EP 0 691 521 A1**
(43) Date de publication de la demande: **10.01.1996**
(21) Numéro de dépôt: 95401547.5
(22) Date de dépôt: 28.06.1995
(51) Int. Cl.: G01B 5/06, G01B 5/28, G01N 3/46, G01N 19/00, G01N 3/48

(54) **Procédé pour mesurer l'épaisseur résiduelle d'une paroi, en fond de rainure éffectuée dans une paroi métallique épaisse**

(30) Priorité: 07.07.1994 FR 9408409
(71) Demandeur: GEC ALSTHOM SYSTEMES ET SERVICES SA, F-75016 Paris (FR)
(72) Inventeur: Dreau, Jean-Yves, F-44700 Orvault (FR); Coue, Jean-Pierre, F-44240 La Chapelle s/Erdre (FR)
(74) Mandataire: Gosse, Michel

(57) **Abrégé**

Procédé pour mesurer l'épaisseur résiduelle (3) d'une paroi (1), en fond de rainure (2) effectuée dans une paroi métallique épaisse, caractérisé par le fait qu'à l'aide d'un pointeau (5), on donne un ou plusieurs coups, de force calibrée, sur la surface de ladite paroi résiduelle (3), que l'on mesure l'empreinte résultante (7), que l'on compare cette mesure avec celles obtenues dans les mêmes conditions sur une série d'éprouvettes (10) de même matériau et ayant chacune une rainure (3A) de même géométrie que celle de la paroi à mesurer et dont l'épaisseur résiduelle connue (3A) en fond de rainure, est variable d'une éprouvette à l'autre et que l'on déduit l'épaisseur résiduelle (3) de la paroi à mesurer, de cette comparaison.

## Description

La présente invention concerne un procédé pour mesurer l'épaisseur résiduelle d'une paroi, en fond de rainure effectuée dans une paroi métallique épaisse.

L'invention s'applique en particulier pour la mesure d'une épaisseur résiduelle d'une paroi métallique d'une enceinte fermée dans laquelle on veut, par exemple, pratiquer une ouverture en effectuant un fraisage décrivant un parcours annulaire ou selon une autre géométrie : carrée, rectangulaire etc... mais qui ne débouche pas sur l'autre face de la paroi de façon à ne pas introduire de copeaux dans l'enceinte. Il s'agit alors de fraiser le plus profondément possible sans déboucher en ne laissant qu'une faible épaisseur de matière. Le morceau est ensuite ôté par arrachement, ce qui évite l'introduction de copeaux.

Pour ce faire, il faut pouvoir mesurer l'épaisseur résiduelle de matière au fond de la rainure effectuée par le fraisage et ceci en tout point de la rainure notamment dans le cas où le fond de la rainure n'a pas une épaisseur constante, par exemple dans le cas d'une rainure effectuée dans une tuyauterie cylindrique. L'hypothèse étant que la paroi n'est accessible que sur une seule face.

L'invention a ainsi pour objet un procédé pour mesurer l'épaisseur résiduelle d'une paroi, en fond de rainure effectuée dans une paroi métallique épaisse, caractérisé par le fait qu'à l'aide d'un pointeau, on donne un ou plusieurs coups, de force calibrée, sur la surface de ladite paroi résiduelle, que l'on mesure l'empreinte résultante, que l'on compare cette mesure avec celles obtenues dans les mêmes conditions sur une série d'éprouvettes de même matériau et ayant chacune une rainure de même géométrie que celle de la paroi à mesurer et dont l'épaisseur résiduelle connue en fond de rainure est variable d'une éprouvette à l'autre, et que l'on déduit l'épaisseur résiduelle de la paroi à mesurer de cette comparaison.

Selon une variante, l'extrémité du pointeau est équipée d'une feuille de clinquant métallique et c'est la déformation résultante de cette feuille qui est ensuite comparée aux empreintes obtenues avec la série d'éprouvettes.

On va maintenant illustrer le procédé de l'invention en se référant au dessin annexé dans lequel :

La figure 1 est un schéma illustrant le procédé de l'invention pour mesurer l'épaisseur résiduelle d'une paroi épaisse en fond de rainure.

La figure 2 illustre l'empreinte en fond de rainure après le coup de pointeau.

La figure 3 montre une variante dans laquelle le pointeau est équipé d'une feuille de clinquant métallique.

Les figures 4 et 5 représentent selon deux vues, une éprouvette étalon utilisée pour comparer l'empreinte obtenue sur cette éprouvette sur le fond de rainure, d'épaisseur connue, avec l'empreinte obtenue figure 2.

La figure 6 est une variante illustrant le cas d'une paroi cylindrique.

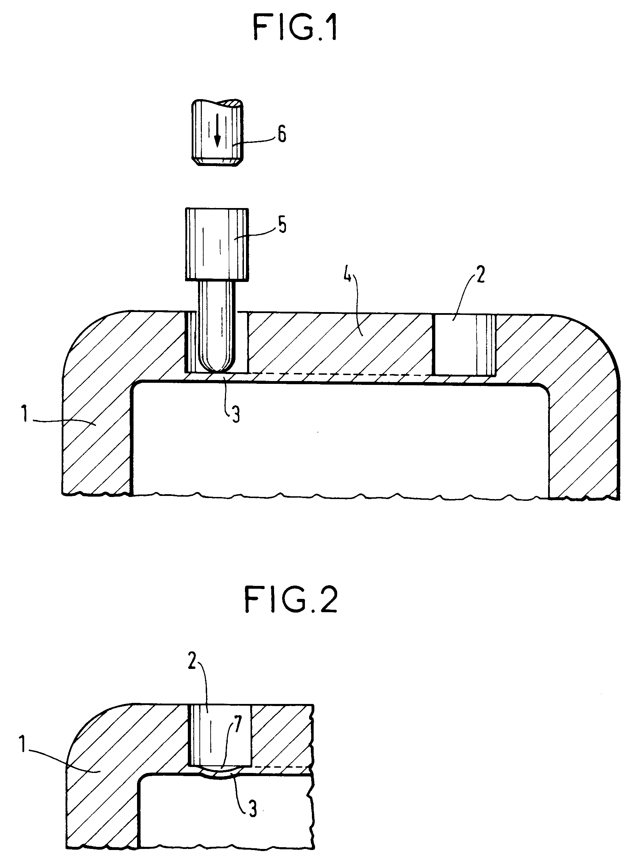

En se référant à la figure 1, on voit une paroi 1 d'une enceinte fermée, par exemple d'un milieu nucléaire.

On souhaite, pour des raisons d'analyse métallurgiques, prélever un morceau de cette paroi d'enceinte mais sans introduire dans l'enceinte aucun copeau. Il s'agit par exemple d'étudier l'évolution que le matériau métallique de l'enceinte a pu subir au cours d'une longue période, par exemple vingt ans, sous un flux de rayonnement.

On effectue ainsi au moyen d'une fraise, une rainure 2 décrivant un parcours fermé tel qu'un cercle par exemple dans la paroi 1 mais sans que cette rainure 2 ne débouche sur l'autre face, de façon à laisser une certaine épaisseur 3 en fond de rainure. Lorsque l'épaisseur 3 de fond de rainure est suffisamment faible, et pour ne pas risquer de transpercer et de laisser tomber des copeaux à l'intérieur on arrache le morceau 4 à l'aide d'un outil.

Il s'agit donc, au cours de l'usinage de la rainure 2, lorsque l'on s'approche de la face opposée, de connaître a peu près, disons au demi-millimètre près environ, l'épaisseur résiduelle de ce fond de rainure 3.

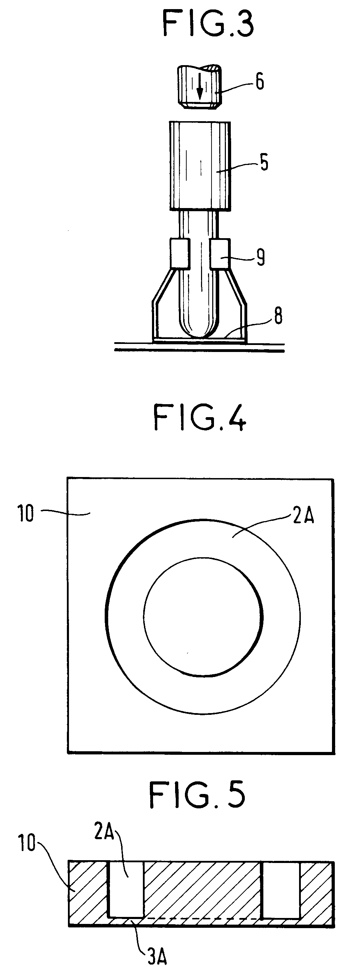

Pour ce faire, on fabrique une série d'éprouvettes telles que celle 10 représentée figure 4 et 5, dans un matériau identique à celui de la paroi 1 de l'enceinte.

Dans chaque éprouvette on pratique une rainure 2A identique à celle 2 de la paroi 1 de l'enceinte. Chaque éprouvette comporte une épaisseur connue de fond de rainure 3A différente, par exemple une pour 4 mm, une autre pour 3 mm, une autre pour 2,5 mm, une pour 1,5 mm, et une pour 1 mm.

Pour chacune de ces éprouvettes, on utilise un pointeau tel que celui 5 représenté sur la figure 1 et à l'aide d'un percuteur tel que 6 on donne un coup de force calibré. Il en résulte, dans l'épaisseur résiduelle 3A de l'éprouvette, une empreinte.

Lors de la mesure de l'épaisseur résiduelle 3 de la paroi 1 on donne un coup sur cette paroi résiduelle avec le même pointeau et avec le même effort, il en résulte également une empreinte 7 (Fig 2) que l'on compare avec celles des différentes éprouvettes correspondant à des épaisseurs calibrées.

On en déduit l'épaisseur résiduelle de la paroi résiduelle 3 de la paroi 1 de l'enceinte.

Ainsi petit à petit, on peut réduire cette épaisseur de la paroi résiduelle 3 en la mesurant puis en continuant à usiner jusqu'à ce que l'on arrive à une épaisseur par exemple voisine de 0,5 à 1 mm.

On peut utiliser successivement, lors des différentes mesures entre deux usinages successifs des efforts calibrés de frappe qui vont en diminuant au fur et à mesure de l'amincissement de la paroi résiduelle 3.

On utilise par exemple un effort de 80 kg entre 2 et 5 mm, 30 kg entre 0,7 et 2 mm et 10 kg entre 0,2 et 0,7 mm.

Bien entendu ces différentes forces de frappe correspondent à celles préalablement utilisées sur les éprouvettes pour les mêmes gammes d'épaisseur de façon à comparer des empreintes faites dans les mêmes conditions.

Si la paroi 1 de l'enceinte est tubulaire, il est nécessaire que les éprouvettes utilisées pour la comparaison des empreintes reproduisent géométriquement une zone identique à celle de la paroi 1 de l'enceinte. On effectuera sur ces éprouvettes, la même rainure que celle effectuée sur la paroi de l'enceinte, seule variera l'épaisseur résiduelle en fond de rainure d'une éprouvette à l'autre.

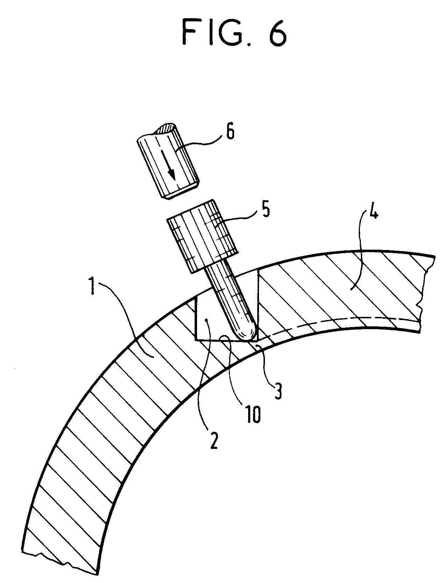

La figure 6 montre précisément une vue partielle en coupe d'une tuyauterie cylindrique.

Dans ce cas, le fond 10 de la rainure 2 n'est pas nécessairement perpendiculaire au rayon de la tuyauterie. Il en résulte que l'épaisseur résiduelle 3 en fond de rainure n'est pas constante. Il faut bien entendu mesurer la paroi à son épaisseur résiduelle la plus faible si on veut absolument éviter que lors de l'usinage de la rainure, on ne traverse la paroi.

Le procédé de mesure n'offre aucune difficulté, il suffit d'utiliser un pointeau 5 suffisamment fin et de frapper le coup en biais comme le montre la figure.

La figure 3 représente une variante dans laquelle le pointeau 5 est équipé d'une feuille de clinquant métallique 8 fixée à l'extrémité du pointeau par des clips de maintien 9. C'est alors la déformation du clinquant qui est mesuré et comparée aux empreintes des éprouvettes.

## Revendications

1. **1)** Procédé pour mesurer l'épaisseur résiduelle (3) d'une paroi (1), en fond de rainure (2) effectuée dans une paroi métallique épaisse, caractérisé par le fait qu'à l'aide d'un pointeau (5), on donne un ou plusieurs coups, de force calibrée, sur la surface de ladite paroi résiduelle (3), que l'on mesure l'empreinte résultante (7), que l'on compare cette mesure avec celles obtenues dans les mêmes conditions sur une série d'éprouvettes (10) de même matériau et ayant chacune une rainure (3A) de même géométrie que celle de la paroi à mesurer et dont l'épaisseur résiduelle connue (3A) en fond de rainure, est variable d'une éprouvette à l'autre et que l'on déduit l'épaisseur résiduelle (3) de la paroi à mesurer, de cette comparaison.

2. **2)** Procédé pour mesurer l'épaisseur résiduelle d'une paroi, en fond de rainure effectuée dans une paroi métallique, caractérisé par le fait qu'à l'aide d'un pointeau (5) dont l'extrémité est équipée d'une feuille de clinquant métallique (8), on donne un ou plusieurs coups, de force calibrée, sur la surface de ladite paroi résiduelle, que l'on compare la déformation résultante de ladite feuille de clinquant métallique avec les empreintes obtenues dans les mêmes conditions sur la paroi résiduelle (3A) d'une série d'éprouvettes (10) de même matériau et ayant chacune une rainure, (2A) de même géométrie que celle de la paroi à mesurer et dont l'épaisseur résiduelle connue, en fond de rainure, est variable d'une éprouvette à l'autre, et que l'on déduit l'épaisseur résiduelle de la paroi à mesurer, de cette comparaison.
